# EUROPEAN PATENT APPLICATION

(11) **EP 4 834 830 A1**
(43) Date of publication of application: **04.11.2026**
(21) Application number: 24913069.1
(22) Date of filing: 27.12.2024
(51) Int. Cl.: C01B 25/10

(54) **METHOD FOR PRODUCING PHOSPHORUS PENTAFLUORIDE AND METHOD FOR PRODUCING HEXAFLUOROPHOSPHATE**

(30) Priority: 28.12.2023 JP 2023222059
(71) Applicant: KANTO DENKA KOGYO CO., LTD., Tokyo 100-0005 (JP)
(72) Inventor: SANO, Kosuke, Kurashiki-shi, Okayama 712-8533 (JP); HAMAGUCHI, Hiroki, Kurashiki-shi, Okayama 712-8533 (JP); KIMURA, Norihisa, Kurashiki-shi, Okayama 712-8533 (JP); HARADA, Akinori, Kurashiki-shi, Okayama 712-8533 (JP); OTA, Teppei, Kurashiki-shi, Okayama 712-8533 (JP)
(74) Representative: Plougmann Vingtoft a/s
(86) International application number: PCT/JP2024/046305
(87) International publication number: WO 2025/143183

(57) **Abstract**

Provided is a method for producing phosphorus pentafluoride, comprising a step of dehydrating hexafluorophosphoric acid hydrate with sulfuric acid having a sulfur trioxide content less than 5 mass%. The method preferably comprises the following steps a) and b): a) concentrating the sulfuric acid that has undergone the dehydrating step; and b) reusing the sulfuric acid concentrated in the step a) for producing phosphorus pentafluoride, wherein the concentrated sulfuric acid is used for dehydrating hexafluorophosphoric acid hydrate. Also, in the method, the dehydrating step is preferably carried out in the presence of hydrogen fluoride, wherein the method comprises the following step c) before the step a): c) recovering the hydrogen fluoride that has undergone the dehydrating step.

## Description

### Technical Field

The present invention relates to a method for producing phosphorus pentafluoride and a method for producing hexafluorophosphate salt.

### Background Art

Phosphorus pentafluoride is industrially useful and highly valued in the fields including semiconductor materials and battery materials. Phosphorus pentafluoride is particularly used as a starting material for lithium hexafluorophosphate, which is employed as, for example, an electrolyte of a lithium-ion battery or a catalyst for organic synthesis.

Examples of known methods for producing phosphorus pentafluoride include the methods described below.

JP H10-245211A (Patent Document 1) and JP S60-251109A (Patent Document 2) disclose methods involving halogen exchange of phosphorus trichloride and chlorine with HF, and halogen exchange of phosphorus pentachloride with HF, respectively.

PCl₃ + 5HF + Cl₂ → PF₅ + 5HCl (Patent Document 1)

PCl₅ + 5HF → PF₅ + 5HCl (Patent Document 2)

JP 2001-122605A (Patent Document 3) discloses the fluorination of phosphorus with F₂.

P + 5/2F₂ → PF₅ (Patent Document 3)

US 3634034A (Patent Document 4) discloses a method including reacting calcium fluoride with phosphoric acid in the presence of sulfur trioxide (anhydrous sulfuric acid). 6SO₃ + 2H₃PO₄ + 2CaF₂ → PF₅ + HPF₆·2H₂O + HF + 6CSO₄ (Patent Document 4)

US 2001/041158A1 (Patent Document 5) discloses a process for preparing phosphorus pentafluoride from hexafluorophosphoric acid hydrate, the process involving use of sulfur trioxide, fuming sulfuric acid, or fluorosulfonic acid.

HPF₆·nH₂O + SO₃ (fuming sulfuric acid) → PF₅ + nH₂SO₄ (Patent Document 5)

### Citation List

### Patent Literature

Patent Literature 1: JP H10-245211A
Patent Literature 2: JP S60-251109A
Patent Literature 3: JP 2001-122605A
Patent Literature 4: US 3634034A
Patent Literature 5: US 2001/041158A1

### Summary of Invention

In the methods disclosed in Patent Documents 1 and 2, five equivalents of by-product HCl are generated. The boiling point of HCl is -84.9°C, which is very close to the boiling point of phosphorus pentafluoride, -84.8°C. This makes separation by distillation difficult, and the methods are thus industrially disadvantageous.

The method disclosed in Patent Document 3 involves an explosive reaction involving oxidation of zero-valent phosphorus, and the reaction thereof is thus difficult to control. Furthermore, F₂ is extremely expensive, making this method economically disadvantageous.

The method disclosed in Patent Document 4 is unsuitable for industrialization because the reaction itself provides a yield as low as approximately 12%, and also because a large amount of calcium sulfate is generated as a byproduct.

The method disclosed in Patent Document 5 is excellent in the yield of phosphorus pentafluoride; however, dehydration of hexafluorophosphoric acid hydrate with SO₃ generates, as a byproduct, sulfuric acid in an amount corresponding to the hydrate. Patent Document 5 states that to the by-product sulfuric acid, SO₃ can be added to reuse the sulfuric acid as fuming sulfuric acid. However, since sulfuric acid is continuously generated, its disposal becomes essential. Furthermore, SO₃ and fluorosulfonic acid constantly generate highly toxic vapors, and also SO₃ is an extremely difficult substance to handle due to its explosiveness, requiring specialized handling techniques.

The present invention has been made in view of the above-mentioned issues, and an object of the present invention is to provide a method for producing phosphorus pentafluoride from hexafluorophosphoric acid hydrate in an economical manner while reducing waste as compared to conventional methods.

As a result of diligent studies to achieve the above object, the present inventors have found a method for producing phosphorus pentafluoride by dehydrating hexafluorophosphoric acid hydrate (HPF₆·nH₂O) with sulfuric acid. Furthermore, the inventors have found that by using the phosphorus pentafluoride obtained by this method, a hexafluorophosphate salt can be produced inexpensively and economically, while generating almost no waste such as sulfuric acid or hydrogen chloride. The present invention has been thus completed.

Specifically, the present invention provides a method for producing phosphorus pentafluoride, the method comprising a step of dehydrating hexafluorophosphoric acid hydrate with sulfuric acid having a sulfur trioxide content less than 5 mass%.

The present invention also provides a method for producing hexafluorophosphate salt, comprising a step of reacting the phosphorus pentafluoride produced by the method described above with a fluoride salt in an organic solvent or a hydrogen fluoride solvent according to a formula (1):

PF₅ + MF → MPF₆ (1)

(wherein M is one or more selected from the group consisting of Li, Na, K, Rb, Cs, Ag, and NH₄.)

### Description of Embodiments

Hereinafter, embodiments of the present invention will be described. The embodiments described below are illustrative for describing the present invention, and the present invention is not limited thereto at all. In the description below, the term "sulfuric acid" may refer to either sulfuric acid (H₂SO₄) as a substance or a solution containing sulfuric acid (H₂SO₄) as a substance, depending on the context.

In the present embodiment, the method for producing phosphorus pentafluoride comprises a step of dehydrating hexafluorophosphoric acid hydrate with sulfuric acid having a sulfur trioxide content less than 5 mass% (hereinafter also simply referred to as "the dehydrating step").

For example, the hexafluorophosphoric acid hydrate to be used is preferably a hexafluorophosphoric acid hydrate obtained by reacting hydrogen fluoride and one or more phosphorus compounds selected from compounds represented by a formula HₓPO_{y}F_{z} (wherein 0≤x≤3, 0≤y≤ 4, 0≤z≤ 6, and P is pentavalent) ("HₓPO_{y}F_{z}") (the one or more phosphorus compounds will also be simply referred to as "the phosphorus compound"). A commercially available product of hexafluorophosphoric acid hydrate may also be used.

The dehydrating step may include, for example, mixing the sulfuric acid, the phosphorus compound, and hydrogen fluoride, and then heating the resulting mixture to dehydrate, with the sulfuric acid, the hexafluorophosphoric acid hydrate produced by the reaction between the phosphorus compound and hydrogen fluoride. Alternatively, the dehydrating step may include, for example, mixing hexafluorophosphoric acid hydrate with the sulfuric acid and heating the resulting mixture to dehydrate the hexafluorophosphoric acid hydrate. Through the dehydration, hexafluorophosphoric acid decomposes into phosphorus pentafluoride and hydrogen fluoride to give phosphorus pentafluoride.

The phosphorus compound may be in the form of an aqueous solution, but it preferably has a high concentration. A high concentration is preferable because it reduces the water content of hexafluorophosphoric acid hydrate to be obtained and therefore decreases the amount of the sulfuric acid used in the dehydrating step. Specifically, in a case where a solution containing the phosphorus compound in water is used as the phosphorus compound, the phosphorus compound content of the solution is preferably 50 mass% or more, more preferably 70 mass% or more, even more preferably 80 mass% or more, and most preferably 85 mass% or more.

For example, in a case where a mixture containing a phosphorus compound having a single phosphorus atom per molecule and water is used as the phosphorus compound to be reacted with hydrogen fluoride, the phosphorus compound content of the mixture is preferably 50 mass% or more, more preferably 70 mass% or more, even more preferably 80 mass% or more, and particularly preferably 85 mass% or more.

In a case where a mixture containing a phosphorus compound having two or more phosphorus atoms per molecule and water is used as the phosphorus compound to be reacted with hydrogen fluoride, the content of the phosphorus compound having two or more phosphorus atoms per molecule in the mixture is preferably 50 mass% or more, more preferably 70 mass% or more, and even more preferably 80 mass% or more.

Examples of such a solution or mixture include commercially available concentrated phosphoric acid, a mixture of anhydrous phosphoric acid and concentrated phosphoric acid, and a mixture of anhydrous phosphoric acid and water.

The phosphorus compound is preferably one containing one or more oxygen atoms, in view of availability and economic efficiency. Examples of HₓPO_{y}F_{z} containing a single phosphorus atom per molecule include pentavalent phosphorus compounds such as H₃PO₄, HPO₃, H₂PO₃F, HPO₂F₂, and POF₃. Examples of HₓPO_{y}F_{z} containing two or more phosphorus atoms per molecule include P₂O₅ (PO₂.₅); polyphosphoric acids such as H₄P₂O₇ (H₂PO₃.₅), H₅P₃O₁₀ (H₅/₃PO₁₀/₃), and H₆P₄O₁₃ (H₁.₅PO₃.₂₅); and pentavalent phosphorus compounds obtained by replacing one or more hydrogen atoms of any of these compounds with fluorine atoms.

Polyphosphoric acid refers to common condensed phosphoric acid, which is represented by (HPO₃)ₙ (where n is a numeral of 2 or greater). It can be obtained by, for example, dehydration condensation of orthophosphoric acid (H₃PO₄) or hydrolysis of diphosphorus pentoxide (P₂O₅). One or more hydrogen atoms in the molecule thereof may be replaced with fluorine atoms, or they may not be replaced. A mixture of polyphosphoric acid and orthophosphoric acid may also be used as the polyphosphoric acid. Polyphosphoric acid containing 60 mass% or more of P₂O₅ is preferred in view of easily reducing the amount of the sulfuric acid used, and polyphosphoric acid containing 80 mass% or more of P₂O₅ is more preferred.

As the phosphorus compound used as a starting material for producing the hexafluorophosphoric acid hydrate, at least one selected from H₃PO₄, P₂O₅, and polyphosphoric acid is particularly preferably used, in view of a smaller amount of water to be generated, which facilitates dehydration of the hexafluorophosphoric acid hydrate with the sulfuric acid, and also in view of ease in handling. Among these, at least one selected from anhydrous phosphoric acid and polyphosphoric acid is especially preferably used.

In producing the hexafluorophosphoric acid hydrate, hydrogen fluoride is preferably used in an amount of 6 mol or more, more preferably 9 mol or more, and particularly preferably 10 mol or more, per 1 mol of phosphorus atoms of the phosphorus compound. In view of hydrogen fluoride utilization efficiency and cost advantage, the amount of hydrogen fluoride used is preferably 50 mol or less, more preferably 35 mol or less, and particularly preferably 30 mol or less, per 1 mol of phosphorus atoms of the phosphorus compound. It is preferred to use anhydrous hydrogen fluoride as the hydrogen fluoride.

The temperature of the reaction between hydrogen fluoride and the phosphorus compound is preferably -40 to 40°C in view of efficiency in the formation of the hexafluorophosphoric acid hydrate and energy used for cooling. The reaction temperature is more preferably -20 to 20°C.

The hexafluorophosphoric acid hydrate obtained by the reaction between the phosphorus compound and hydrogen fluoride requires no particular treatment or the like for excess hydrogen fluoride, and can be used as it is in the dehydrating step.

The dehydrating step and the synthesis of the hexafluorophosphoric acid hydrate may be carried out in one pot. For example, instead of reacting the phosphorus compound with hydrogen fluoride and then mixing the sulfuric acid with the reaction product, the phosphorus compound, hydrogen fluoride, and the sulfuric acid may be placed simultaneously in a reaction vessel and heated. Alternatively, either one of the phosphorus compound and hydrogen fluoride may be placed first in a reaction vessel, the sulfuric acid may then be placed, and thereafter the other of the phosphorus compound and hydrogen fluoride may be placed in the reaction vessel, followed by heating. Thus, the order of placing the phosphorus compound, hydrogen fluoride, and the sulfuric acid is not particularly limited. The reason for this is as follows: in many cases, the reaction between the phosphorus compound and hydrogen fluoride is completed instantaneously, and therefore there is no substantial difference between introducing the phosphorus compound, hydrogen fluoride, and the sulfuric acid simultaneously into a single reaction vessel, and reacting the hexafluorophosphoric acid hydrate with the sulfuric acid.

For example, the phosphorus compound and the sulfuric acid may be mixed in advance, and water contained in the phosphorus compound may be removed beforehand by, for example, concentration with sulfuric acid, followed by mixing the resultant with hydrogen fluoride. In this case, the phosphorus compound and the sulfuric acid are typically mixed and heated before mixing with hydrogen fluoride, so that at least part of the water contained in the phosphorus compound is removed. The heating may be carried out under reduced pressure. On this occasion, the heating temperature is preferably 150 to 300°C, and more preferably 200 to 250°C. In a case where the pressure is reduced, a preferable pressure range is the same as the preferable pressure range in the step a) described later. Highly concentrated phosphoric acid having a smaller amount of water has high viscosity, resulting in poor stirring and heating efficiency and therefore difficulty in concentration. However, by concentrating it in the form of a mixed liquid with the sulfuric acid, the poor stirring efficiency and the poor heating efficiency can be prevented.

The addition of sulfuric acid may be dropwise addition, adding and mixing all at once, or adding and mixing in divided portions.

The addition of hydrogen fluoride may also be dropwise addition, adding and mixing all at once, or adding and mixing in divided portions.

In the dehydrating step in the present invention, dehydration proceeds as the sulfuric acid is hydrated with water molecules contained in the hexafluorophosphoric acid hydrate.

In the present invention, the sulfuric acid having a sulfur trioxide (SO₃) content of less than 5 mass% is used, and the sulfur trioxide is an impurity. By using such sulfuric acid, phosphorus pentafluoride can be inexpensively and economically produced while reusing the used sulfuric acid to thereby effectively reduce sulfuric acid waste, in the present invention.

Here, the sulfuric acid having a sulfur trioxide content less than 5 mass% encompasses both sulfuric acid containing no sulfur trioxide and sulfuric acid containing sulfur trioxide. When the total liquid amount of the sulfuric acid used is defined as 100 mass%, the sulfur trioxide content is less than 5 mass%, preferably 3 mass% or less, more preferably 1 mass% or less, even more preferably 1000 mass ppm or less, and particularly preferably 100 mass ppm or less. In each of the Examples described later, sulfuric acid having a sulfur trioxide content of 100 mass ppm or less was used.

In contrast, in the method disclosed in Patent Document 5, dehydration of the hexafluorophosphoric acid hydrate proceeds as SO₃ or fluorosulfonic acid, which is a water-reactive substance, forms a covalent bond with a water molecule to give sulfuric acid. Thus, the method of the present invention and the method disclosed in Patent Document 5 are completely different from each other in the dehydration mechanism. Sulfuric acid has a dehydration ability lower than that of SO₃ or fluorosulfonic acid, which is a strong dehydrating agent, and has a different dehydration mechanism therefrom, and in a decomposition reaction caused by dehydration of the hydrate, using sulfuric acid is one of the distinctive features of the present invention and would not be conceived by a person skilled in the art in light of common technical knowledge.

For example, the method for measuring the amount of sulfur trioxide in sulfuric acid may be a simple method including heating sulfuric acid to a temperature equal to or higher than 45°C, which is the boiling point of SO₃, and determining the weight loss. Alternatively, an unknown SO₃ content in sulfuric acid can be determined by providing sulfuric acid samples having known SO₃ contents, measuring the electrical conductivities at the respective contents to create a calibration curve, and using the calibration curve to determine the SO₃ content.

In the dehydrating step, the amount of sulfuric acid (H₂SO₄) used is preferably at least a stoichiometric amount relative to water, in view of promoting dehydration. Accordingly, the amount of sulfuric acid (H₂SO₄) used is preferably 1.0 equivalent or more, more preferably 1.2 equivalents or more, particularly preferably 1.3 equivalents or more, and most preferably 1.5 equivalents or more, relative to water. On the other hand, if the amount is excessively large, the volume of the reaction liquid is also large, which is industrially unfavorable in view of reactor efficiency. Accordingly, the amount of sulfuric acid (H₂SO₄) used is preferably 30 equivalents or less, more preferably 20 equivalents or less, and particularly preferably 10 equivalents or less, relative to water. As a range, the amount of sulfuric acid (H₂SO₄) used is preferably 1.0 equivalent or more and 30 equivalents or less, relative to water, and the amount is more preferably 1.2 equivalents or more and 20 equivalents or less, particularly preferably 1.3 equivalents or more and 15 equivalents or less, and most preferably 1.5 equivalents or more and 10 equivalents or less, relative to water. The term "water" here refers to the total amount of water in the reaction system, including both water contained in the sulfuric acid introduced into the reaction system and water contained in the hexafluorophosphoric acid hydrate.

Furthermore, in the present invention, the amount of sulfuric acid in the dehydrating step is preferably 4 mol or more per 1 mol of phosphorus atoms of the phosphorus component, in view of not only improving the production efficiency of phosphorus pentafluoride but also, for example, reduction in the amount of heat required for the concentrating step described later, if carried out, due to the already higher concentration of sulfuric acid to be subjected to the concentrating step. On the other hand, in the dehydrating step, the amount of sulfuric acid is preferably 20 mol or less, and more preferably 15 mol or less, per 1 mol of phosphorus atoms of the phosphorus component, in view of reactor efficiency. The amount of sulfuric acid in the dehydrating step is preferably 4 mol or more, and more preferably 9 mol or more, per 1 mol of phosphorus atoms of the phosphorus component. As a range, the amount of sulfuric acid in the dehydrating step is preferably 4 mol or more and 20 mol or less, and more preferably 9 mol or more and 15 mol or less, per 1 mol of phosphorus atoms of the phosphorus component.

As used herein, the term "phosphorus component" refers to the hexafluorophosphoric acid hydrate that is the subject of the dehydrating step, in a case where dehydration is carried out by mixing a commercially available hexafluorophosphoric acid hydrate with sulfuric acid, or in a case where hexafluorophosphoric acid hydrate is prepared by previously reacting the phosphorus compound and hydrogen fluoride and is then introduced into another reaction system, followed by mixing sulfuric acid to carry out the dehydration.

In a case where the step of obtaining hexafluorophosphoric acid hydrate by reacting the phosphorus compound and hydrogen fluoride and the step of dehydrating the hexafluorophosphoric acid hydrate are in one pot (for example, in a case where both steps are carried out simultaneously), the phosphorus compound may be regarded as the phosphorus component.

In the present embodiment, the concentration (mass%) of the sulfuric acid used in the dehydrating step is preferably 80% or more. When sulfuric acid having a concentration equal to or higher than this concentration is used, sufficient dehydration from hexafluorophosphoric acid hydrate proceeds in the dehydrating step, and a decrease in the yield of phosphorus pentafluoride can be suppressed. The concentration of the sulfuric acid is more preferably 90% or more, and particularly preferably 98% or more. The upper limit of the concentration of the sulfuric acid is 100%.

The sulfuric acid may be sulfuric acid that has been concentrated in the sulfuric acid-concentrating step a) described later after used in the dehydrating step (the step b) described later).

In the present embodiment, the step of dehydrating hexafluorophosphoric acid hydrate with sulfuric acid is preferably carried out in the presence of hydrogen fluoride, and more preferably carried out in the presence of anhydrous hydrogen fluoride. Hydrogen fluoride may be introduced in a liquid form, or hydrogen fluoride may be vaporized and introduced in a gaseous form.

All steps described herein may be carried out in a batch process or in a continuous process, without any limitation. Examples of a continuous reactor include a continuous-flow microreactor, a line mixer, and a continuous tank reactor. As the continuous-flow microreactor, a stacked multi-channel reactor SMCR manufactured by KOBE STEEL, LTD may be used, for example.

The amount of hydrogen fluoride used in the dehydrating step is preferably 1 equivalent or more and 100 equivalents or less per phosphorus atom of the phosphorus component subjected to the dehydrating step. When the amount of hydrogen fluoride is 1 equivalent or more per phosphorus atom of the phosphorus component, hydrolysis of hexafluorophosphoric acid hydrate during heating tends to be less likely to proceed. On the other hand, when the amount of hydrogen fluoride is 100 equivalents or less per phosphorus atom of the phosphorus component, difficulty in the temperature rise of the reaction liquid can be prevented, which results in a tendency that a decrease in the yield of phosphorus pentafluoride can be suppressed. In view of these, the amount of hydrogen fluoride used in the dehydrating step is more preferably 3 equivalents or more, and particularly preferably 5 equivalents or more, per phosphorus atom of the phosphorus component. The amount of hydrogen fluoride is more preferably 50 equivalents or less, further preferably 30 equivalents or less, even more preferably 20 equivalents or less, and most preferably 15 equivalents or less. Accordingly, a more preferred range of the amount of hydrogen fluoride is 3 equivalents or more and 50 equivalents or less, particularly preferably 5 equivalents or more and 30 equivalents or less, and even more preferably 5 equivalents or more and 15 equivalents or less. In a case where the sulfuric acid, the phosphorus compound, and hydrogen fluoride are reacted in one pot while the hydrogen fluoride is used in excess relative to the phosphorus compound, the amount of hydrogen fluoride used in the dehydrating step refers to the amount of excess hydrogen fluoride after formation of hexafluorophosphoric acid. The same applies to the description of the amount relative to the sulfuric acid in the following paragraph. In the dehydrating step, PF₅ and HF are generated from hexafluorophosphoric acid, and this newly generated hydrogen fluoride is not included in the amount of HF used in the dehydrating step.

In a case where hydrogen fluoride is used in the dehydrating step, the amount of hydrogen fluoride used in the dehydrating step is preferably 0.5 mol or more and 10 mol or less, per 1 mol of sulfuric acid subjected to the dehydrating step. When the amount of hydrogen fluoride is 0.5 mol or more per 1 mol of sulfuric acid, there is an advantage that hydrolysis of hexafluorophosphoric acid hydrate during heating is less likely to proceed. On the other hand, when the amount of hydrogen fluoride is 10 mol or less per 1 mol of sulfuric acid, difficulty in the temperature rise of the reaction liquid can be prevented, which results in a tendency that a decrease in the yield of phosphorus pentafluoride can be suppressed, and is also advantageous in terms of reactor efficiency. In addition, when the amount of hydrogen fluoride is within the above-described range, it is easy to obtain sulfuric acid having a predetermined concentration in the concentrating step after the dehydration. The amount of hydrogen fluoride is more preferably 0.8 mol or more, particularly preferably 1.0 mol or more, and even more preferably 1.2 mol or more, per 1 mol of sulfuric acid subjected to the dehydrating step. The amount of hydrogen fluoride is more preferably 8.0 mol or less, particularly preferably 5.0 mol or less, and even more preferably 3.0 mol or less. Accordingly, a more preferred range of the amount of hydrogen fluoride is 0.8 mol or more and 8.0 mol or less, particularly preferably 1.0 mol or more and 5.0 mol or less, and even more preferably 1.2 mol or more and 3.0 mol or less, per 1 mol of sulfuric acid subjected to the dehydrating step.

As the hydrogen fluoride, hydrogen fluoride recovered in the dehydrating step or in the hydrogen fluoride-recovering step described later can be used.

Generally, a reaction vessel containing the sulfuric acid and the hexafluorophosphoric acid hydrate, and preferably also hydrogen fluoride is heated in the dehydrating step. During heating, phosphorus pentafluoride begins to be produced at around 60°C, and it is preferable to gradually increase the temperature. Rapid heating causes early removal of hydrogen fluoride from the system, thereby causing hydrolysis of the hexafluorophosphoric acid hydrate. Thus, the heating is preferably carried out within a temperature range of 60°C to 200°C, more preferably within a temperature range of 60°C to 180°C, and particularly preferably within a temperature range of 60°C to 160°C.

In the dehydrating step, the time required to reach the reaction temperature (the maximum temperature in the reaction) in the presence of the phosphorus component and sulfuric acid after reaching 25°C is preferably 1 hour or more, and more preferably 4 hours or more. The time required to reach the reaction temperature (the maximum temperature in the reaction) in the presence of the phosphorus component and sulfuric acid after reaching 25°C is, for example, preferably 36 hours or less in view of shortening the reaction time, and more preferably 24 hours or less. These upper and lower limits of time are particularly preferable in the case of a batch process.

Particularly, in a case of a continuous process, the residence time of the reaction liquid containing the phosphorus component and sulfuric acid within the above-described temperature range is preferably 10 seconds or more, more preferably 30 seconds or more, and even more preferably 1 minute or more, in view of production efficiency. The residence time is preferably 2 hours or less, more preferably 1 hour or less, and even more preferably 30 minutes or less. A preferable range is 10 seconds to 2 hours, more preferably 30 seconds to 1 hour, and even more preferably 1 minute to 30 minutes. After heating, the liquid may be further circulated by a pump if the amount of phosphorus pentafluoride generated is small.

In a case of a continuous process, the heat transfer area per reactor volume can be large as compared with a batch process, thereby improving thermal efficiency. Accordingly, the reactor can be downsized, and productivity per volume-time can be significantly improved.

Since hydrogen fluoride is likely to be entrained by the phosphorus pentafluoride generated, the phosphorus pentafluoride may be cooled by a condenser or the like to return the entrained hydrogen fluoride to the reaction vessel. This can further prevent hydrolysis of hexafluorophosphoric acid hydrate, and also eliminates a need for an operation such as replenishing hydrogen fluoride in an amount that has escaped from the reaction system together with phosphorus pentafluoride. In addition, there is an advantage, for example, that contamination with hydrogen fluoride can be reduced in the reaction of phosphorus pentafluoride with a fluoride salt according to the above formula (1). When cooling is performed by a condenser, the cooling temperature of cooling water or the like may be set to be not lower than the boiling point of phosphorus pentafluoride (-84°C) and not higher than the boiling point of hydrogen fluoride (20°C), and is preferably -80°C to 20°C. More preferably, the cooling temperature is -40°C to 10°C, and even more preferably -20°C to 0°C. In a case where hydrogen fluoride is returned into the reaction vessel during the dehydrating step, hydrogen fluoride is preferably allowed to remain in the liquid phase in the reaction vessel after the dehydrating step, in an amount of 1 mass% or more, and more preferably 3 mass% or more, based on sulfuric acid, in view of exhibiting the above-described effects of hydrogen fluoride.

Even when a condenser or the like is not used, the phosphorus pentafluoride generated may be used as it is in the next reaction. In the present embodiment, hydrogen chloride, which is difficult to separate from phosphorus pentafluoride, is not by-produced, and thus no special operation for separation is needed.

The heating method in the dehydrating step is not particularly limited, and a general method can be used. For example, direct heating using a heater or indirect heating by heat exchange with a heat medium may be employed.

The operating pressure of the dehydrating step is not particularly limited; however, the dehydrating step is preferably carried out under reduced pressure in view of effectively accelerating the production rate of phosphorus pentafluoride. Nevertheless, if the vacuum level is excessively increased, hydrogen fluoride tends to be easily distilled out of the system, and accordingly, the pressure in the dehydrating step is preferably from -0.07 to 0.10 MPaG, more preferably from -0.05 to 0.05 MPaG, and most preferably from -0.03 to 0.01 MPaG. In a case where the dehydrating step is carried out under reduced pressure, the pressure is preferably from -0.07 to -0.01 MPaG, and more preferably from -0.05 to -0.01 MPaG.

In the present embodiment, it is preferable to include the following steps a) and b):
a) concentrating the sulfuric acid that has undergone the dehydrating step; and
b) reusing the sulfuric acid concentrated in the step a) for producing phosphorus pentafluoride, wherein the concentrated sulfuric acid is used for dehydrating hexafluorophosphoric acid hydrate.

In the present embodiment, the following step c) may be included before the step a):
c) recovering the hydrogen fluoride that has undergone the dehydrating step.

Here, examples of the method for recovering the hydrogen fluoride in the step c) include heating in the presence of sulfuric acid during or after the dehydrating step to distill out the hydrogen fluoride from the reaction system and then recovering it using a cooling trap or the like.

In a case where the cooling is performed using a trap or the like, the cooling temperature of cooling water or the like is preferably from -60 to 20°C, more preferably from -40 to 10°C, and even more preferably from -20 to 0°C, for example. Through this step, hydrogen fluoride can be recovered for reuse from the reaction vessel during or after the dehydrating step, and also sulfuric acid having higher purity can be more easily obtained.

In the step c), unreacted hexafluorophosphoric acid, difluorophosphoric acid, which is a hydrolysis product of hexafluorophosphoric acid, and monofluorophosphoric acid, which is a product of further progress of hydrolysis, undergo hydrolysis from around 100°C. In view of promoting these hydrolysis reactions and recovering high-purity hydrogen fluoride and sulfuric acid, it is preferable in the step c) to heat the interior of the reaction vessel to 100°C or higher. On the other hand, in view of suppressing an increase in the water content in the hydrogen fluoride distilled as concentration of sulfuric acid proceeds, the heating is preferably performed at 250°C or lower. Bubbling with an inert gas may also be performed to promote the distillation of hydrogen fluoride from the post-reaction liquid. Furthermore, the promoting of the removal of hydrogen fluoride may be carried out under reduced pressure.

As shown in Example 1 described later, it is possible that, in the residue remaining in the reaction vessel after the step c), almost no impurities other than orthophosphoric acid, sulfuric acid, and water are present. Even if fluorinated phosphorus components (HPF₆, H₂PO₃F, HPO₂F₂, and POF₃) and HSO₃F, which are impurities, are contained in the reaction vessel after the dehydrating step, these fluorinated phosphorus components and HSO₃F are not highly volatile, and therefore undergo hydrolysis when the reaction liquid is heated in the step c). When the heating is performed, hydrolysis generally occurs more readily than volatilization. With the progress of hydrolysis, dehydrofluorination from these impurities proceeds to release anhydrous hydrogen fluoride. For example, the chemical equations of hydrolysis of H₂PO₃F and HPO₂F₂ may be as follows.

HPO₂F₂ + 2H₂O → H₃PO₄ + 2HF

H₂PO₃F + H₂O → H₃PO₄ + HF

In this manner, almost all fluorine components other than those discharged out of the system in the form of phosphorus pentafluoride can be recovered as anhydrous hydrogen fluoride. In addition, the purity of sulfuric acid after the step c) is high.

Although hydrogen fluoride may be recovered during the dehydrating step, recovering hydrogen fluoride after the dehydrating step is preferable for the following reason: recovering hydrogen fluoride after the dehydrating step can prevent hydrogen fluoride from being discharged out of the system before sufficient generation of phosphorus pentafluoride in the dehydrating step and can reduce the possibility of formation of hydrolysis products.

The fluoride ion concentration in the reaction liquid after the step c) is preferably 1000 mass ppm or less in view of high recovery efficiency, and more preferably 100 mass ppm or less. The fluoride ion concentration can be measured by ion chromatography.

Regarding the step a), the method for concentrating sulfuric acid is not particularly limited, and any known method may be used. Examples thereof include common concentration such as vacuum reduced-pressure concentration, and concentration by electrolysis or electrodialysis.

For example, in the case of vacuum reduced-pressure concentration, the absolute pressure in the reaction vessel when operated under reduced-pressure is preferably in the range of 1 to 100 hPa, and more preferably in the range of 1 to 20 hPa, in view of successfully obtaining sulfuric acid having a desired concentration. The heating temperature in the step of concentrating sulfuric acid is preferably 150°C or higher, and more preferably 200°C or higher, and is preferably 300°C or lower, and more preferably 250°C or lower. As a range, 150 to 300°C is preferable, and 200 to 250°C is more preferable.

In the step a), the concentration of sulfuric acid after the concentrating is preferably 80 mass% or more. Such a concentration allows dehydration of hexafluorophosphoric acid hydrate to sufficiently proceed in the step of reusing the concentrated sulfuric acid for producing phosphorus pentafluoride, thereby suppressing a decrease in the yield of phosphorus pentafluoride. More preferably, the concentration of sulfuric acid is 90 mass% or more, and particularly preferably 97 mass% or more. The upper limit of the concentration of sulfuric acid after the concentrating is 100 mass%, and 99 mass% or less is preferable in view of reducing energy required for the concentrating.

The concentration of sulfuric acid before the concentrating is preferably 75 mass% or more, and more preferably 90 mass% or more, in view of successfully obtaining high-concentration sulfuric acid by the concentrating in the step a). The concentration of sulfuric acid before the concentrating is preferably 98 mass% or less in view of ease of production, for example.

When concentrating sulfuric acid in the step a), phosphoric acid, which is a starting material of hexafluorophosphoric acid hydrate, may be added and concentrated simultaneously. For example, by mixing 85 mass% phosphoric acid with sulfuric acid after the step c) and concentrating them simultaneously, 15 mass% of water contained in the phosphoric acid and the water that has been hydrated with sulfuric acid in the dehydrating step can be removed simultaneously, thereby obtaining a highly concentrated, mixed liquid of phosphoric acid and sulfuric acid with a lower water content. In addition, phosphoric acid generally has higher viscosity as the water content thereof decreases, which reduces stirring and heating efficiency to result in difficulty in the concentrating, as described above; therefore, concentrating sulfuric acid together with phosphoric acid is preferable also in this respect.

As described above, the sulfuric acid obtained can be subjected again to the dehydrating step to reuse it for dehydrating new hexafluorophosphoric acid hydrate, thereby avoiding generation of sulfuric acid waste.

Next, a method for producing a hexafluorophosphate salt according to the present embodiment will be described.

The method for producing a hexafluorophosphate salt according to the present embodiment includes the step of reacting phosphorus pentafluoride produced by the above-described method with a fluoride salt in an organic solvent or a hydrogen fluoride solvent according to the following formula (1):

PF₅ + MF → MPF₆ + (1)

(wherein M is one or more selected from the group consisting of Li, Na, K, Rb, Cs, Ag, and NH₄.)

The organic solvent used in the production process of the hexafluorophosphate salt is preferably an ether or a carbonate, which is a non-aqueous solvent. Specific examples include dimethoxyethane, diethylene glycol dimethyl ether, triethylene glycol dimethyl ether, tetraethylene glycol dimethyl ether, polyethylene glycol dimethyl ether, tetrahydrofuran, dimethyl carbonate, methyl ethyl carbonate, diethyl carbonate, methyl propyl carbonate, methyl isopropyl carbonate, ethyl propyl carbonate, dipropyl carbonate, methyl butyl carbonate, ethyl butyl carbonate, dibutyl carbonate, methyl pentyl carbonate, ethyl pentyl carbonate, dipentyl carbonate, methyl heptyl carbonate, ethyl heptyl carbonate, diheptyl carbonate, methyl hexyl carbonate, ethyl hexyl carbonate, dihexyl carbonate, methyl octyl carbonate, ethyl octyl carbonate, dioctyl carbonate, methyl trifluoroethyl carbonate, ethylene carbonate, propylene carbonate, 1,2-butylene carbonate, 2,3-butylene carbonate, 1,2-pentylene carbonate, and 2,3-pentylene carbonate.
The organic solvent is more preferably selected from dimethyl carbonate (DMC) and ethylene carbonate since the reaction solution to be obtained can be used as an electrolyte solution as it is. These ethers and carbonates may be used in combination of two or more thereof.

The reaction temperature in the production process of the hexafluorophosphate salt is preferably from -20°C to 100°C. A temperature of -20°C or higher can prevent adverse effects on stirring due to an increase in the solvent viscosity. A temperature of 100°C or lower can suppress decomposition of the hexafluorophosphate salt and the solvent and also suppress progress of volatilization of the solvent. The reaction temperature is more preferably from 0°C to 50°C, and even more preferably from 10°C to 30°C.

The reaction between phosphorus pentafluoride and the fluoride salt is very fast, and therefore, the reaction time in the production process of the hexafluorophosphate salt is not particularly limited and depends on the feed rate of phosphorus pentafluoride.

In a case where a hydrogen fluoride solvent such as an anhydrous hydrogen fluoride solvent is used in the production process of the hexafluorophosphate salt, the hexafluorophosphate salt is separated by concentration or crystallization. The concentration method is not particularly limited, and reduced-pressure concentration may be used, for example. The crystallization temperature may be equal to or higher than the melting point of hydrogen fluoride (-84°C) and equal to or lower than the boiling point of hydrogen fluoride (20°C), and is preferably from -60°C to -20°C.

In a case where an organic solvent commonly used as an electrolyte solvent such as dimethyl carbonate is used in the production process of the hexafluorophosphate salt, the reaction solution may be used directly as an electrolyte solution. Concentrating or diluting may also be performed for adjusting the concentration.

M in the formula (1) is preferably one selected from Li, Na, K, Rb, Cs, Ag, and NH₄ in view of high demand and broad applicability as, for example, battery materials or catalysts for organic synthesis, and M is particularly preferably one selected from Li, Na, and K, and most preferably Li.

The present invention provides the following.
[1] A method for producing phosphorus pentafluoride, comprising a step of dehydrating hexafluorophosphoric acid hydrate with sulfuric acid having a sulfur trioxide content less than 5 mass%.
[2] The method according to [1], wherein the dehydrating step is carried out in the presence of hydrogen fluoride.
[3] The method according to [1] or [2], wherein the dehydrating step is carried out under atmospheric pressure or reduced pressure.
[4] The method according to any one of [1] to [3], wherein the dehydrating step is carried out at a pressure of -0.07 to 0.10 MPaG.
[5] The method according to any one of [1] to [4], comprising a step a) and a step b):
   a) concentrating the sulfuric acid that has undergone the dehydrating step; and
   b) reusing the sulfuric acid concentrated in the step a) for producing phosphorus pentafluoride, wherein the concentrated sulfuric acid is used for dehydrating hexafluorophosphoric acid hydrate.
[6] The method according to [5], wherein the dehydrating step is carried out in the presence of hydrogen fluoride, and the method comprises a step c) before the step a):
   c) recovering the hydrogen fluoride that has undergone the dehydrating step.
[7] The method according to [5] or [6], wherein the sulfuric acid concentrated in step a) has a concentration of 80 mass% to 100 mass%.
[8] The method according to any one of [1] to [7], wherein the hexafluorophosphoric acid hydrate is a hexafluorophosphoric acid hydrate obtained by reacting hydrogen fluoride and one or more phosphorus compounds selected from compounds represented by a formula HₓPO_{y}F_{z} (wherein 0≤x≤3, 0≤y≤ 4, 0≤z≤ 6, and P is pentavalent).

A method for producing hexafluorophosphate salt, comprising a step of reacting the phosphorus pentafluoride produced by the method according to any one of [1] to [8] with a fluoride salt in an organic solvent or a hydrogen fluoride solvent according to a formula (1):

PF₅ + MF → MPF₆ (1)

(wherein M is one or more selected from the group consisting of Li, Na, K, Rb, Cs, Ag, and NH₄).

### Examples

The present invention will now be described in detail by way of Examples and Comparative Examples; however, the present invention is not limited by these examples. Unless otherwise specified, all of Examples and Comparative Examples were carried out under atmospheric pressure.

### [Example 1]

### First Step: Synthesis of hexafluorophosphoric acid hydrate

Into a 500-mL perfluoroalkoxy alkane (PFA) container was introduced 70.1 g (3.50 mol) of anhydrous HF, and the container was cooled to -10°C in an ice bath. Then, 20.0 g of 85 mass% phosphoric acid (0.17 mol, water: 0.17 mol) was added dropwise thereto over 30 minutes. After raising the temperature to room temperature (25°C) with stirring, the formation of HPF₆ was confirmed by ¹⁹F-NMR and ³¹P-NMR (JNM-ECZ400S, manufactured by JEOL Ltd.) (yield: 100%). In the ¹⁹F-NMR, peaks of HF and HPF₆ were found, and in the ³¹P-NMR, only a peak of HPF₆ was found. The hexafluorophosphoric acid hydrate prepared in this step corresponded to 40.8 g of HPF₆·5H₂O (0.17 mol, water: 0.86 mol).

### Second Step: Synthesis of phosphorus pentafluoride and synthesis of lithium hexafluorophosphate

90.1 g of a solution of HPF₆·5H₂O in HF (0.17 mol, water: 0.86 mol, HF: 2.48 mol) prepared in the same manner as in the First Step was cooled to -10°C in an ice bath, and 221.1 g of 96 mass% sulfuric acid (2.18 mol, water: 0.44 mol) was added dropwise thereto over 40 minutes. After completion of the dropwise addition, the internal temperature of the reaction vessel was gradually raised to approximately 150°C over 32 hours using an aluminum block heater. HF distilled off from the reaction system was returned to the reaction vessel as much as possible by cooling the condenser at -20°C. The generated phosphorus pentafluoride was collected in the form of lithium hexafluorophosphate in a trap containing approximately 200 mL of a LiF/DMC solution containing 4.7 g (0.18 mol) of LiF. As a result, the amount of lithium hexafluorophosphate produced in the first 4 hours was 0.043 mol (yield: 25%), and the production rate of lithium hexafluorophosphate for this duration was 1.6 g/hour. Ultimately, 0.145 mol of lithium hexafluorophosphate was obtained (yield: 85%). The reaction temperature in the reaction for producing lithium hexafluorophosphate was 25°C. As a result of analyzing the liquid composition in the reaction vessel by ¹⁹F-NMR, ³¹P-NMR, and ICP-OES (5900 ICP-OES, manufactured by Agilent Technologies, Inc.), it was found that the composition included 0.1 mass% of HPF₆, 0.2 mass% of H₂PO₃F, 0.8 mass% of HPO₂F₂, 0.006 mass% of POF₃, 2.6 mass% of HSO₃F, 3.3 mass% of hydrogen fluoride, 0.01 mass% of H₃PO₄, 83.6 mass% of sulfuric acid, and water as the balance.

### Third Step: Distillation of HF from reaction residue remaining in reaction vessel

The residue remaining in the reaction vessel obtained in the Second Step was heated at an internal temperature of 100°C for 12 hours using an aluminum block heater while performing N₂ bubbling (~2.0 L/min). The distilled HF was collected in a trap cooled at -20°C and a water trap. The F ion concentration in the residue was found to be reduced to 40 mass ppm or less, as measured by ion chromatography (IC-5000, manufactured by Thermo Fisher Scientific Inc.). As a result of analyzing the liquid composition in the reaction vessel after this step by ¹⁹F-NMR, ³¹P-NMR, ICP-OES, and a Karl Fischer moisture analyzer (CA-310, manufactured by Nittoseiko Analytech Co., Ltd.), the total amount of HPF₆, H₂PO₃F, HPO₂F₂, POF₃, and HSO₃F was 0 mass%, the amount of hydrogen fluoride was 0 mass%, the amount of H₃PO₄ was 1.2 mass%, the amount of sulfuric acid was 91 mass%, and the balance was water.

### Fourth Step: Concentrating sulfuric acid in residue remining in the reaction vessel after HF distillation

The 91 mass% sulfuric acid obtained by HF distillation in the Third Step was transferred to a glass three-neck flask, followed by reducing the pressure to 10 hPa using a diaphragm pump, and was heated at an internal temperature of 250°C for 5.5 hours using an aluminum block heater. It was found that the water content of the residue was reduced to 2.0 mass% or less, as measured by a Karl Fischer moisture analyzer (CA-310, manufactured by Nittoseiko Analytech Co., Ltd.). The concentrated sulfuric acid had a concentration of 97 mass%.

### Fifth Step: Reuse of concentrated sulfuric acid

Into a 500-mL PFA container was introduced 38.4 g (1.92 mol) of anhydrous HF, and the container was cooled to -10°C in an ice bath. Then, 11.1 g of 85 mass% phosphoric acid (0.11 mol, water: 0.09 mol) was added dropwise thereto over 30 minutes. After raising the temperature to room temperature (25°C) with stirring, 105.1 g of 97 mass% sulfuric acid (1.04 mol, water: 0.18 mol) obtained by the concentrating in the Fourth Step was added dropwise thereto over 40 minutes. After completion of the dropwise addition, the internal temperature of the reaction vessel was gradually raised to approximately 150°C over 31 hours using an aluminum block heater. HF distilled off from the reaction system was returned to the reaction vessel as much as possible by cooling the condenser at -20°C. The generated phosphorus pentafluoride was collected in the form of lithium hexafluorophosphate in a trap containing approximately 200 mL of a LiF/DMC solution containing 3.1 g (0.12 mol) of LiF. As a result, the amount of lithium hexafluorophosphate produced in the first 4 hours was 0.025 mol (yield: 23%), and the production rate of lithium hexafluorophosphate for this duration was 0.94 g/hour. Ultimately, lithium hexafluorophosphate was obtained at a yield of 74% (reaction temperature: 25°C). Since sulfuric acid was reused repeatedly, no sulfuric acid waste was generated.

### [Example 2]

Into a 500-mL PFA container was introduced 15.4 g of polyphosphoric acid (0.17 mol in terms of phosphorus atom, 80 mass% P₂O₅; manufactured by FUJIFILM Wako Pure Chemical Corporation), and while cooling at -10°C in an ice bath, 168.0 g of 96 mass% sulfuric acid (1.65 mol, water: 0.37 mol) was added dropwise thereto over 10 minutes. Then, 79.0 g (3.95 mol) of anhydrous HF was added dropwise thereto over 60 minutes. After raising the temperature to room temperature (25°C) with stirring, the formation of HPF₆ was confirmed by ¹⁹F-NMR and ³¹P-NMR (yield: 100%). Using an aluminum block heater, the internal temperature of the reaction vessel was gradually raised to approximately 133°C over 22 hours. HF distilled off from the reaction system was returned to the reaction vessel as much as possible by cooling the condenser at -20°C. The generated phosphorus pentafluoride was collected in the form of lithium hexafluorophosphate in a trap containing approximately 200 mL of a LiF/DMC solution containing 4.9 g (0.19 mol) of LiF (reaction temperature: 25°C). As a result, the amount of lithium hexafluorophosphate produced in the first 4 hours was 0.071 mol (yield: 41%), and the production rate of lithium hexafluorophosphate for this duration was 2.7 g/hour. Ultimately, 0.161 mol of lithium hexafluorophosphate was obtained (yield: 93%).

### [Example 3]

Into a 1000-mL PFA container was introduced 128.3 g of 85 mass% phosphoric acid (1.11 mol, water: 1.07 mol), and 1153.7 g of 98 mass% sulfuric acid (11.54 mol, water: 1.28 mol) was added dropwise thereto over 10 minutes at room temperature. Subsequently, while cooling at -10°C in an ice bath, 400.3 g (20.01 mol) of anhydrous HF was added dropwise thereto over 120 minutes. Using a plunger pump, the resulting liquid was introduced at 45 mL/min (approximately 75 g/min) into a 10 m long, 1/4-inch PFA tube heated at 100°C in an oil bath to preheat the liquid. The preheated reaction liquid was then introduced into a multi-channel SiC (silicon carbide) reactor (SMCR^{®}, manufactured by Shinko Environmental Solutions Co., Ltd.) having a capacity of 120 mL and heated with oil at 200°C (residence time: 2.7 minutes). After heating, gas-liquid separation was performed, and the liquid component was collected in a 1000-mL PFA container. HF in the gaseous component was collected in a container of the same type by cooling the condenser at -60°C. The generated phosphorus pentafluoride was collected in the form of lithium hexafluorophosphate in a trap containing approximately 500 mL of a LiF/EMC solution containing 32.0 g (1.23 mol) of LiF (reaction temperature: 25°C). As a result of circulating the collected liquid in the apparatus for 3 hours, 0.69 mol of lithium hexafluorophosphate was obtained (yield: 62%). The production rate of lithium hexafluorophosphate for this duration was 35 g/hour. As a result of circulation for 10 hours in the apparatus, 1.02 mol of lithium hexafluorophosphate was obtained ultimately (yield: 92%).

### [Example 4]

Into a 1000-mL PFA container was introduced 167.5 g of 85 mass% phosphoric acid (1.45 mol, water: 1.40 mol), and 816.3 g of 98 mass% sulfuric acid (8.16 mol, water: 0.91 mol) was added dropwise thereto over 10 minutes at room temperature. Subsequently, while cooling at -10°C in an ice bath, 524.4 g (26.21 mol) of anhydrous HF was added dropwise thereto over 120 minutes. Using a plunger pump, the prepared liquid was introduced at 30 mL/min (approximately 56 g/min) into a 10 m long, 1/4-inch PFA tube heated at 100°C in an oil bath to preheat the liquid. The preheated reaction liquid was then introduced into a multi-channel SiC reactor (SMCR^{®}, manufactured by Shinko Environmental Solutions Co., Ltd.) having a capacity of 120 mL and heated with oil at 200°C (residence time: 4.0 minutes). After heating, gas-liquid separation was performed, and the liquid component was collected in a 1000-mL PFA container. HF in the gaseous component was collected in a container of the same type by cooling the condenser at -60°C. The generated phosphorus pentafluoride was collected in the form of lithium hexafluorophosphate in a trap containing approximately 500 mL of a LiF/EMC solution containing 40.3 g (1.55 mol) of LiF (reaction temperature: 25°C). As a result of circulating the collected liquid in the apparatus for 3 hours, 0.57 mol of lithium hexafluorophosphate was obtained (yield: 40%). The production rate of lithium hexafluorophosphate for this duration was 29 g/hour. As a result of circulation for 11 hours in the apparatus, 1.24 mol of lithium hexafluorophosphate was obtained ultimately (yield: 86%).

### [Example 5]

### First Step: Concentrating mixed solution of 85 mass% phosphoric acid and 98 mass% sulfuric acid

900.1 g of 85 mass% phosphoric acid (7.81 mol, water: 7.50 mol) and 3949.7 g of 98 mass% sulfuric acid (39.46 mol, water: 4.39 mol) were transferred to a 5-L glass three-neck flask, followed by reducing the pressure to 6 hPa using a diaphragm pump, and the mixture was heated for 7 hours at an internal temperature of 200°C in an oil bath. As a result of measurement by a Karl Fischer moisture analyzer, it was found that the water content of the residue remaining in the reaction vessel was reduced to 1 mass% or less.

### Second Step

Into a 5-L PFA container was introduced 6533 g of the mixed solution prepared in the same manner as in the First Step (containing 1167 g (11.9 mol) of phosphoric acid, 5287 g (54.0 mol) of sulfuric acid, and 79 g (4.4 mol) of water). Subsequently, while cooling at -10°C in an ice bath, 3564 g (178.13 mol) of anhydrous HF was added dropwise thereto over 120 minutes. The resulting liquid was transferred to a 20-L PFA-lined reactor, and the reactor underwent pressure reduction to -0.03 MPaG using a vacuum pump. Using a diaphragm pump, the liquid was introduced at 800 mL/min into a 5 m long, 1/4-inch PFA tube heated at 150°C in an oil bath. After heating, gas-liquid separation was performed, and the liquid component was returned to the reactor. HF in the gaseous component was liquefied by cooling the condenser at -60°C and returned to the reactor as with the liquid component. The generated phosphorus pentafluoride was allowed to pass through the condenser, and collected in the form of lithium hexafluorophosphate in a trap containing approximately 4 L of a LiF/EMC solution containing 250 g (9.65 mol) of LiF (reaction temperature: 25°C). As a result of circulating the liquid in the reactor through the heated PFA tube and the reactor for 3 hours, 518 g (3.42 mol, yield: 28.8%) of lithium hexafluorophosphate was obtained. The production rate of lithium hexafluorophosphate for this duration was 172.5 g/hour. After an operating time of 19 hours, 10.0 mol of lithium hexafluorophosphate was obtained ultimately (yield: 84%).

### [Example 6]

Into a 5-L PFA container was introduced 7145 g of the mixed solution prepared in the same manner as in the First Step of Example 5 (containing 1191 g (12.2 mol) of phosphoric acid, 5883 g (60.0 mol) of sulfuric acid, and 72 g (4.0 mol) of water). Subsequently, while cooling at -10°C in an ice bath, 3666 g (182.23 mol) of anhydrous HF was added dropwise thereto over 120 minutes. The resulting liquid was transferred to a 20-L PFA-lined reactor. Using a diaphragm pump, the liquid was introduced at 800 mL/min into a 2 m long, 1/4-inch PFA tube heated at 150°C in an oil bath. After heating, gas-liquid separation was performed, and the liquid component was returned to the reactor. HF in the gaseous component was liquefied by cooling the condenser at -60°C and returned to the reactor as with the liquid component. The generated phosphorus pentafluoride was allowed to pass through the condenser, and collected in the form of lithium hexafluorophosphate in a trap containing approximately 5 L of a LiF/EMC solution containing 320 g (12.34 mol) of LiF (reaction temperature: 25°C). As a result of circulating the liquid in the reactor through the heated PFA tube and the reactor for 3 hours, 130 g (0.86 mol, yield: 7%) of lithium hexafluorophosphate was obtained. The production rate of lithium hexafluorophosphate for this duration was 43.6 g/hour. After an operating time of 31 hours, 9.6 mol of lithium hexafluorophosphate was obtained ultimately (yield: 79%).

### [Comparative Example 1]

Into a 1000-mL PFA container was introduced 74.0 g (3.70 mol) of anhydrous HF, and the container was cooled to -10°C in an ice bath. Then, 20.0 g of 85 mass% phosphoric acid (0.17 mol, water: 0.17 mol) was added dropwise thereto over 60 minutes. After raising the temperature to room temperature (25°C) with stirring, 81.2 g of fuming sulfuric acid (60 mass% SO₃, FUJIFILM Wako Pure Chemical Corporation; SO₃: 0.61 mol, H₂SO₄: 0.33 mol) was added dropwise thereto over 60 minutes. After completion of the dropwise addition, the internal temperature of the reaction vessel was gradually raised to approximately 150°C over 8.5 hours using an aluminum block heater. The generated phosphorus pentafluoride was collected in the form of lithium hexafluorophosphate in a trap containing approximately 200 mL of a LiF/DMC solution containing 5.1 g of LiF. As a result, lithium hexafluorophosphate was obtained at a yield of 91%, corresponding to 19.9 g of phosphorus pentafluoride generated. The amount of sulfuric acid waste was 96.7 g of 95 mass% sulfuric acid including the amount of fuming sulfuric acid used, phosphoric acid and water derived from the reaction. This corresponds to 4.0 g of sulfuric acid waste per gram of phosphorus pentafluoride produced.

### [Comparative Example 2]

Into a 1000-mL PFA container was introduced 70.1 g of anhydrous HF, and the container was cooled to -10°C in an ice bath. Then, 20.0 g of 85 mass% phosphoric acid (0.17 mol, water: 0.17 mol) was added dropwise thereto over 60 minutes. The temperature was raised to room temperature (25°C) and the resultant was stirred. Then, 88.4 g (0.87 mol) of fluorosulfonic acid was added dropwise thereto over 60 minutes. After completion of the dropwise addition, the internal temperature of the reaction vessel was gradually raised to approximately 150°C over 7 hours using an aluminum block heater. HF distilled off from the reaction system was returned to the reaction vessel as much as possible by cooling the condenser at -20°C. The generated phosphorus pentafluoride was collected in the form of lithium hexafluorophosphate in a trap containing approximately 200 mL of a LiF/DMC solution containing 4.5 g (0.17 mol) of LiF. As a result, lithium hexafluorophosphate was obtained at a yield of 97%, corresponding to 21.2 g of phosphorus pentafluoride generated. The amount of sulfuric acid waste was 103.9 g of 100 mass% sulfuric acid including phosphoric acid and sulfuric acid generated by hydrolysis of fluorosulfonic acid with reaction-derived water. This corresponds to 4.9 g of sulfuric acid waste per gram of phosphorus pentafluoride produced.

As described above, the method for producing phosphorus pentafluoride according to the present invention, in which sulfuric acid is used for dehydration of hexafluorophosphoric acid hydrate, is not only economical and capable of circulating hydrogen fluoride and sulfuric acid, but is also a sustainable and clean production method that generates almost no sulfuric acid waste and thus reduces the emission of environmentally burdensome substances.

### Industrial Applicability

According to the present invention, phosphorus pentafluoride can be produced by a clean method that can not only reduce hydrogen chloride waste but also effectively reduce sulfuric acid waste as compared with conventional techniques. In addition, the method of the present invention is economical in that inexpensive and relatively easy-to-handle materials are used. Furthermore, by using phosphorus pentafluoride obtained by the method, a hexafluorophosphate salt can be produced industrially advantageously.

## Claims

1. A method for producing phosphorus pentafluoride, comprising a step of dehydrating hexafluorophosphoric acid hydrate with sulfuric acid having a sulfur trioxide content less than 5 mass%.

2. The method according to claim 1, wherein the dehydrating step is carried out in the presence of hydrogen fluoride.

3. The method according to claim 1, wherein the dehydrating step is carried out under atmospheric pressure or reduced pressure.

4. The method according to claim 1, wherein the dehydrating step is carried out at a pressure of -0.07 to 0.10 MPaG.

5. The method according to claim 1 or 2, comprising a step a) and a step b):
a) concentrating the sulfuric acid that has undergone the dehydrating step; and
b) reusing the sulfuric acid concentrated in the step a) for producing phosphorus pentafluoride, wherein the concentrated sulfuric acid is used for dehydrating hexafluorophosphoric acid hydrate.

6. The method according to claim 5, wherein the dehydrating step is carried out in the presence of hydrogen fluoride, and the method comprises a step c) before the step a):
c) recovering the hydrogen fluoride that has undergone the dehydrating step.

7. The method according to claim 5, wherein the sulfuric acid concentrated in step a) has a concentration of 80 mass% to 100 mass%.

8. The method according to claim 1 or 2, wherein the hexafluorophosphoric acid hydrate is a hexafluorophosphoric acid hydrate obtained by reacting hydrogen fluoride and one or more phosphorus compounds selected from compounds represented by a formula HₓPO_{y}F_{z} (wherein 0≤x≤3, 0≤y≤ 4, 0≤z≤ 6, and P is pentavalent).

9. A method for producing hexafluorophosphate salt, comprising a step of reacting the phosphorus pentafluoride produced by the method according to claim 1 or 2 with a fluoride salt in an organic solvent or a hydrogen fluoride solvent according to a formula (1):
PF₅ + MF → MPF₆ (1)
(wherein M is one or more selected from the group consisting of Li, Na, K, Rb, Cs, Ag, and NH₄).
